(19) Europäisches Patentamt
European Patent Office
Office européen des brevets

(11) EP 4 572 392 A1

(12) **EUROPEAN PATENT APPLICATION**
published in accordance with Art. 153(4) EPC

(43) Date of publication:
18.06.2025 Bulletin 2025/25

(51) International Patent Classification (IPC):
**H04W 28/06** (2009.01)

(21) Application number: 23856506.3

(52) Cooperative Patent Classification (CPC):
**H04L 27/26; H04W 28/06**

(22) Date of filing: 15.08.2023

(86) International application number:
**PCT/CN2023/113110**

(87) International publication number:
**WO 2024/041416 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 22.08.2022 CN 202211006871

(71) Applicant: **ZTE CORPORATION**
**Shenzhen, Guangdong 518057 (CN)**

(72) Inventor: **WEI, Jidong**
**Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **SIGNAL TRANSMISSION METHOD AND APPARATUS, TERMINAL, AND STORAGE MEDIUM**

(57) The present application relates to the field of communications, and discloses a signal transmission method and apparatus, a terminal, and a storage medium. The signal transmission method in embodiments of the present application comprises: encoding bit data to be transmitted to obtain a modulation signal corresponding to said bit data; writing the modulation signal into a first resource domain constructed by means of a Doppler dimension and a frequency dimension to obtain a modulation signal in the first resource domain; converting the modulation signal in the first resource domain into a second resource domain constructed by means of a time dimension and a frequency dimension to obtain a modulation signal in the second resource domain; and determining a transmittable signal of said bit data on the basis of the modulation signal in the second resource domain.

200

```
                                                    S202
┌─────────────────────────────────────────────────────┐
│ Encode bit data to be transmitted to obtain a        │
│ modulation signal corresponding to the bit data to   │
│ be transmitted                                        │
└─────────────────────────────────────────────────────┘
                          │
                          ▼                 S204
┌─────────────────────────────────────────────────────┐
│ Write the modulation signal into a first resource    │
│ domain constructed by means of a Doppler dimension   │
│ and a frequency dimension to obtain a modulation     │
│ signal in the first resource domain                  │
└─────────────────────────────────────────────────────┘
                          │
                          ▼                 S206
┌─────────────────────────────────────────────────────┐
│ Transform the modulation signal in the first         │
│ resource domain into a second resource domain        │
│ constructed by means of a time dimension and a       │
│ frequency dimension to obtain a modulation signal in │
│ the second resource domain                            │
└─────────────────────────────────────────────────────┘
                          │
                          ▼                 S208
┌─────────────────────────────────────────────────────┐
│ Determine a transmittable signal of the bit data to  │
│ be transmitted on the basis of the modulation signal │
│ in the second resource domain                         │
└─────────────────────────────────────────────────────┘
```

FIG. 2

EP 4 572 392 A1

**Description**

CROSS-REFERENCE TO RELATED APPLICATIONS

The present application claims priority to Chinese patent application No. 202211006871.5 filed on August 22, 2022 to the China Patent Office, and entitled "SIGNAL TRANSMISSION METHOD AND APPARATUS, TERMINAL, AND STORAGE MEDIUM", the entire content of which is incorporated herein by reference.

TECHNICAL FIELD

Embodiments of the present application relate to the field of communications, in particular to a method and apparatus for transmitting a signal, a terminal, and a storage medium.

BACKGROUND

With the development of communication and industrial technologies, people are increasingly demanding a higher wireless communication rate in a high-speed mobile scenario. Long term evolution (LTE) and new radio (NR) systems mainly adopt single carrier and multicarrier waveform technologies of orthogonal frequency division multiplexing (OFDM). This waveform is more suitable for signal transmission for a low-speed mobile user from the perspective of a moving speed of the user, while a fast time-varying characteristic of a high-speed mobile user causes a certain situation of a limited demodulation performance under this waveform, and therefore, a mode for transmitting a signal for the high-speed mobile user that improves the signal demodulation performance is needed.

SUMMARY

Embodiments of the present application provide a method and apparatus for transmitting a signal, a terminal, and a storage medium, which can improve a signal demodulation performance for a high-speed mobile user.

In a first aspect, a method for transmitting a signal is provided, including: encoding bit data to be transmitted to obtain a modulation signal corresponding to the bit data to be transmitted; writing the modulation signal into a first resource domain constructed by means of a Doppler dimension and a frequency dimension to obtain a modulation signal in the first resource domain; transforming the modulation signal in the first resource domain into a second resource domain constructed by means of a time dimension and a frequency dimension to obtain a modulation signal in the second resource domain; and determining a transmittable signal of the bit data to be transmitted on the basis of the modulation signal in the second resource domain.

In a second aspect, a method for transmitting a signal is provided, including: receiving a transmittable signal, and determining a modulation signal in a second resource domain constructed by means of a time dimension and a frequency dimension corresponding to the transmittable signal; transforming the modulation signal in the second resource domain into a first resource domain constructed by means of a Doppler dimension and a frequency dimension to obtain a modulation signal in the first resource domain; and extracting the modulation signal in the first resource domain, and decoding the extracted modulation signal to obtain bit data to be processed.

In a third aspect, a transmitting device is provided, including: an encoding module, configured to encode bit data to be transmitted to obtain a modulation signal corresponding to the bit data to be transmitted; a writing module, configured to write the modulation signal into a first resource domain constructed by means of a Doppler dimension and a frequency dimension to obtain a modulation signal in the first resource domain; a transforming module, configured to transform the modulation signal in the first resource domain into a second resource domain constructed by means of a time dimension and a frequency dimension to obtain a modulation signal in the second resource domain; and a transmitting module, configured to determine a transmittable signal of the bit data to be transmitted on the basis of the modulation signal in the second resource domain.

In a fourth aspect, a receiving device is provided, including: a receiving module, configured to receive a transmittable signal, and determine a modulation signal in a second resource domain constructed by means of a time dimension and a frequency dimension corresponding to the transmittable signal; a transforming module, configured to transform the modulation signal in the second resource domain into a first resource domain constructed by means of a Doppler dimension and a frequency dimension to obtain a modulation signal in the first resource domain; and an extracting module, configured to extract the modulation signal in the first resource domain, and decode the extracted modulation signal to obtain bit data to be processed.

In a fifth aspect, a readable storage medium is provided, storing a program or instruction thereon, wherein the program or instruction, when executed by a processor, implements steps of the method according to the first aspect, or implements steps of the method according to the second aspect.

In a sixth aspect, a chip is provided, the chip includes a processor and a communication interface, the communication interface is coupled to the processor, and the processor is configured to run a program or instructions to implement the method according to the first aspect, or to implement the method according to the second aspect.

In a seventh aspect, a computer program/program product is provided, the computer program/program product is stored in a storage medium, and the computer program/program product is executed by at least one processor to implement steps of the method for transmitting the signal according to the first aspect or the second aspect.

BRIEF DESCRIPTION OF DRAWING(S)

FIG. 1 shows a schematic diagram of a wireless communication system to which an embodiment of the present application may be applied.

FIG. 2 is a schematic flowchart of a method for transmitting a signal according to an embodiment of the present application.

FIG. 3 is a schematic diagram of a process of converting a signal between domains according to an embodiment of the present application.

FIG. 4 is a schematic structural diagram of a transmitting device according to an embodiment of the present application.

FIG. 5 is a schematic flowchart of a method for transmitting a signal according to another embodiment of the present application.

FIG. 6 is a schematic diagram of a performance comparison of two waveforms, ODFS and OFDM, in a Los channel scenario according to an embodiment of the present application.

FIG. 7 is a schematic diagram of a performance comparison of two waveforms, ODFS and OFDM, in a NLos channel scenario according to an embodiment of the present application.

FIG. 8 is a schematic structural diagram of a terminal according to an embodiment of the present application.

FIG. 9 is a schematic structural diagram of a receiving device according to another embodiment of the present application.

FIG. 10 is a schematic structural diagram of a network-side device according to another embodiment of the present application.

DETAILED DESCRIPTION

Technical solutions in embodiments of the present application will be clearly described below in conjunction with accompanying drawings in the embodiments of the present application. Apparently, the described embodiments are part of the embodiments of the present application, not all of them. Based on the embodiments in the present application, all other embodiments obtained by those of ordinary skill in the art belong to the scope of protection of the present application.

Terms "first", "second" and the like in the specification and claims of the present application are used to distinguish similar objects, and are not used to describe a specific order or sequence. It should be understood that the terms so used may be interchanged in appropriate cases so that the embodiments of the present application can be implemented in an order other than those illustrated or described here, the objects distinguished by "first" and "second" are usually of one type, and the number of the objects is not limited, e.g., there may be one or a plurality of first objects. In addition, "and/or" in the specification and claims indicates at least one of connected objects, and a character "/" universally indicates that front and back associated objects are in an "or" relationship.

It is worth noting that a technology described in the embodiments of the present application is not limited to a long term evolution (LTE)/LTE-advanced (LTE-A) system, but may further be used in other wireless communication systems such as code division multiple access (CDMA), time division multiple access (TDMA), frequency division multiple access (FDMA), orthogonal frequency division multiple access (OFDMA), single-carrier frequency-division multiple access (SC-FDMA), and other systems. Terms "system" and "network" in the embodiments of the present application are often used interchangeably, and the described technology may be used for the systems and radio technologies mentioned above, as well as for other systems and radio technologies. The following description describes a new radio (NR) system for an exemplary purpose and uses NR terms in most of the following description, but these technologies may also be applied to applications other than NR system applications, such as a 6th generation (6G) communication system.

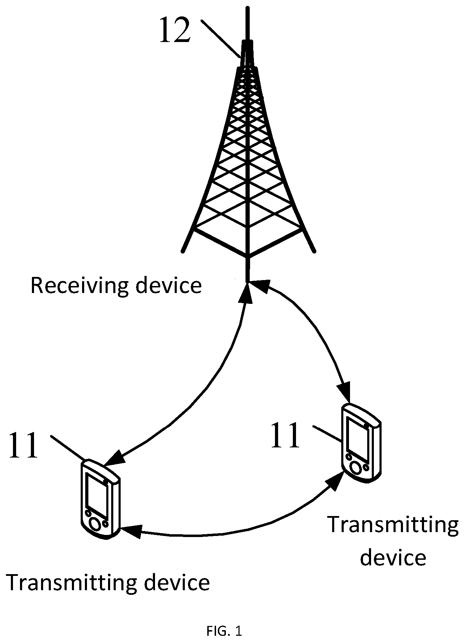

FIG. 1 shows a block diagram of a wireless communication system to which an embodiment of the present application may be applied. The wireless communication system includes a transmitting device 11 and a receiving device 12. The transmitting device 11 may be a mobile phone, a tablet personal computer, a laptop computer or referred to as a notebook computer, a personal digital assistant (PDA), a handheld computer, a netbook, an ultra-mobile personal computer (UMPC), a mobile Internet device (MID), an augmented reality (AR)/virtual reality (VR) device, a robot, a wearable device, vehicle user equipment (VUE), pedestrian user equipment (PUE), smart home (home devices with wireless communication functions, such as a refrigerator, a TV, a washing machine, or furniture), a game console, a personal computer (PC), teller machines, or kiosks, and other terminal-side devices. ), or a terminal-side device such as a teller machine or a self-service machine. The wearable device includes: a smart watch, a smart bracelet, a smart headset, smart glasses, smart jewelry ( a smart bangle, a smart hand chain, a smart ring, a smart necklace, a smart anklet, a smart ankle chain, etc.), a smart wristband, smart clothing, and so on. It needs to be noted that the embodiment of the present application does not limit a specific type of the transmitting device 11. The receiving device 12 may include an access network device or a core network device, wherein the access network device 12 may also be referred to as a wireless access network device, a radio access network (RAN), a wireless access network function, or a wireless access network unit. The access network device 12 may include a base station, a wireless local area network (WLAN) access point, or a WiFi node, etc. The base station may be referred to as a Node B, an evolved Node B (eNB), an access point, a base transceiver station (BTS), a radio base station, a radio transceiver, a basic service set (BSS), an extended service set (ESS), a home B node, a home evolved B node, a transmitting receiving point (TRP) or some other suitable term in the field. As long as the same technical effect is achieved, the base station is not limited to a specific technical vocabulary. It needs to be noted that in the embodiment of the present application, only a base station in the NR system is introduced as an example, without limiting the specific type of the base station. The core network device may include, but is not limited to, at least one of the following: a core network node, a core network function, a mobility management entity (MME), an access and mobility management function (AMF), a session management function (SMF), a user plane function (UPF), a policy control function (PCF), a policy and charging rules function (PCRF), an edge application server discovery function (EASDF), unified data management (UDM), a unified data repository (UDR), a home subscriber server (HSS), a centralized network configuration (CNC), a network repository function (NRF), a network exposure function (NEF), a local NEF or L-NEF, a binding support function (BSF), an application function (AF), and so on. It needs to be noted that in the embodiment of the present application, only the core network device in the NR system is introduced as an example, without limiting the specific type of the core network device.

A method for transmitting a signal provided by an embodiment of the present application is described in detail below by means of some embodiments and application scenarios thereof in conjunction with accompanying drawings.

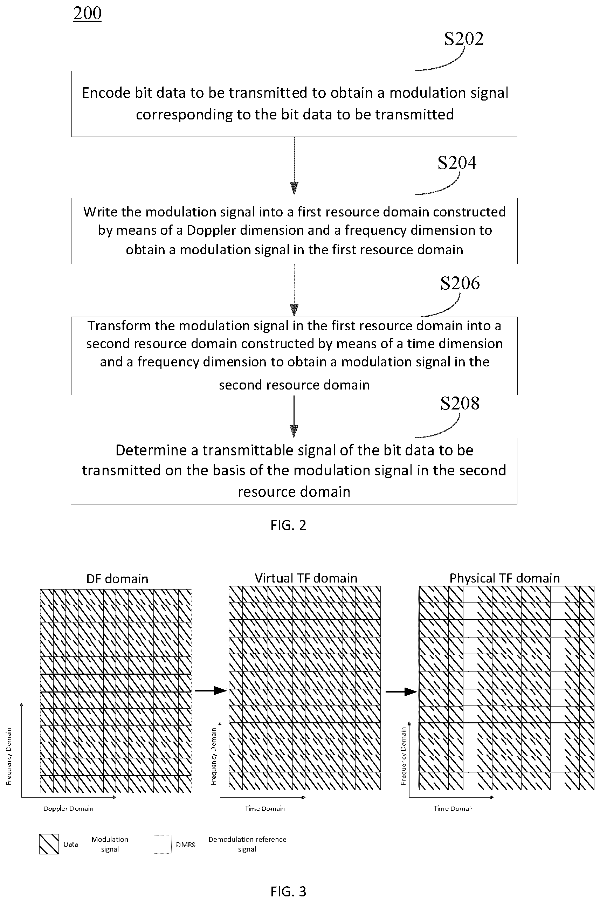

As shown in FIG. 2, an embodiment of the present application provides a method 200 for transmitting a signal, the method may be performed by a transmitting device, the transmitting device may be a terminal or a network-side device, and in other words, the method may be performed by software or hardware installed at a terminal. The method includes the following steps.

S202: bit data to be transmitted is encoded to obtain a modulation signal corresponding to the bit data to be transmitted.

In an implementation, bit-level processing such as channel encoding may be performed according to a bit data stream to be transmitted to obtain the modulation signal corresponding to the bit data to be transmitted.

S204: the modulation signal is written into a first resource domain constructed by means of a Doppler dimension and a frequency dimension to obtain a modulation signal in the first resource domain.

In an implementation, the modulation signal obtained by encoding may be mapped to the first resource domain (i.e., a Frequency-Doppler domain, which may be shortened to a DF domain) constructed by means of the Doppler dimension and the frequency dimension according to certain rules, and a specific mapping process of data symbols may be written sequentially in rows or sequentially in columns, which is not limited herein.

S206: the modulation signal in the first resource domain is transformed into a second resource domain constructed by means of a time dimension and a frequency dimension to obtain a modulation signal in the second resource domain.

A grid in the first resource domain may be the same or may be not the same size as a grid in the second resource domain. In an implementation, if the grid in the first resource domain is the same size as the grid in the second resource domain, the modulation signal in the first resource domain may be directly transformed into the second resource domain constructed by means of the time dimension and the frequency dimension to obtain the modulation signal in the second resource domain.

In an implementation, if the grid in the first resource domain is not the same size as the grid in the second resource domain (i.e., a Time-Frequency domain, which may be shortened to a physical TF domain), the modulation signal in the first resource domain may be transformed into a third resource domain (i.e., a Time-Frequency domain, which may be shortened to a virtual TF domain) constructed by means of a time dimension and a frequency dimension to obtain a modulation signal in the third resource domain. A grid in the third resource domain is the same size as the grid in the first resource domain. Then the modulation signal in the third resource domain is mapped to the second resource domain constructed by means of the time dimension and the frequency dimension and sequentially written into the second resource domain in rows or columns.

FIG. 3 is a schematic diagram of a resource mapping process of a signal from a first resource domain to a second resource domain. As shown in FIG. 3, the grid in the third resource domain may be the same size as the grid in the first resource domain, and a data stream in the first resource domain may be transformed into the third resource domain constructed by means of the time dimension and the frequency dimension.

In an implementation, the modulation signal in the first resource domain may be transformed, in a Doppler direction and on the basis of an inverse Fourier transform, into the third resource domain constructed by means of the time dimension and the frequency dimension. The inverse Fourier transform may be such transform modes as an inverse discrete Fourier transform or a short-time inverse Fourier transform.

In some examples, a resource grid in the DF domain may be represented by M*N, M may be used to represent the number of sampling points in the frequency dimension, N may be used to represent the number of sampling points in the Doppler dimension, a modulation signal of each resource grid may be represented by X[m,d], and X[m,d] may be used to identify an $m^{th}$ modulation signal in the frequency dimension and a $d^{th}$ modulation signal in the Doppler dimension. A following formula (1) takes the inverse discrete Fourier transform (IDFT) as an example, the modulation signal X[m,d] in the DF domain is transformed into the TF domain, i.e.

$$\hat{X}[\hat{m},\hat{t}] = \frac{1}{N}\sum_{n=0}^{N-1} X[m,d]e^{-j2\pi tn/N} \qquad (1)$$

It needs to be noted that N may be the number of points of the IDFT, which may take the same or different values in different frequency directions.

Then, modulation signals of the virtual TF domain are mapped to physical resource blocks of the physical TF domain in accordance with a preset mapping rule. There may be various preset mapping rules, for example, TF signals of the virtual TF domain may be written into the resource grid of the physical TF domain of an actual physical resource block sequentially in rows, a size of the physical resource block transmitted by an actual user is F*T, and mapping of resources may be performed row by row, i.e., $\hat{X}[\hat{m}, \hat{t}] \rightarrow X[m,t]$.

S208: a transmittable signal of the bit data to be transmitted is determined on the basis of the modulation signal in the second resource domain.

In an implementation, a demodulation reference signal corresponding to the bit data to be transmitted may be mapped to the second resource domain to obtain a demodulation reference signal (DMRS) in the second resource domain. As shown in FIG. 3, the DMRS and Data (i.e., the modulation signal) may be mapped in the physical TF domain, and then the transmittable signal is determined on the basis of the modulation signal and the demodulation reference signal in the second resource domain.

In an implementation, the modulation signal in the second resource domain may be pre-encoded to obtain a pre-encoded signal corresponding to the modulation signal in the second resource domain, then the pre-encoded signal and the demodulation reference signal in the second resource domain are transformed into a time domain transmission signal, and the time domain transmission signal is determined as the transmittable signal. By pre-encoding the modulation signal in the second resource domain, not only a peak-to-average ratio can be reduced, but also a frequency diversity and a Doppler diversity gain can be obtained simultaneously, thus improving a demodulation performance of the user as a whole.

In some examples, if the modulation signal in the second resource domain is a single carrier signal, the modulation signal in the second resource domain may be pre-encoded, on the basis of a discrete Fourier transform (DFT), in a frequency direction to obtain the pre-encoded signal corresponding to the modulation signal in the second resource domain. That is:

$$X[f,t] = \frac{1}{\sqrt{M}}\sum_{m=0}^{M-1} X[m,t]e^{-j2\pi tf/M} \qquad (2)$$

where M represents the number of Re carried on a symbol of the user.

In some examples, if the signal in the second resource domain is a multicarrier signal, the modulation signal in the second resource domain may be determined as the pre-encoded signal corresponding to the modulation signal in the second resource domain. That is, if the signal in the second resource domain is the multicarrier signal, there is no need for transmission pre-encoding for X[m, t], i.e., X[f, t] → X[m,t].

After the demodulation reference signal in the second resource domain is obtained, resource mapping of ports and antennas may be performed on a resource block to be transmitted, and the process may realize mapping of data to the ports and the antennas through pre-encoded weights (which may be shortened to W weights). The pre-encoded weights on a data symbol (i.e., the pre-encoded signal) and a DMRS symbol may the same or different, specifically depending on the mode actually adopted by the system, which is not limited herein. The W weight may be calculated from a channel monitoring signal, or may also be obtained through feedback information of the transmitting device/receiving device, or may be selected and obtained from a preset weight set, and the process is not specifically limited by the present application.

Then, a frequency-time transform may be performed on the modulation signal and the demodulation reference signal in the second resource domain to obtain a time-domain signal (i.e., the transmittable signal), and then the transmittable signal may be transmitted out from radio-frequency radio at a radio-frequency unit through processes such as windowing and shaping filtering.

In the method for transmitting the signal provided by the embodiment of the present application, the bit data to be transmitted is encoded to obtain the modulation signal corresponding to the bit data to be transmitted, the modulation signal is written into the first resource domain constructed by means of the Doppler dimension and the frequency dimension to obtain the modulation signal in the first resource domain, the modulation signal in the first resource domain is transformed into the second resource domain constructed by means of the time dimension and the frequency dimension to obtain the modulation signal in the second resource domain, and the transmittable signal of the bit data to be transmitted is determined on the basis of the modulation signal in the second resource domain. A new waveform-orthogonal frequency-Doppler space (OFDM) is proposed on the basis of an orthogonal frequency division multiplexing (OFDM) waveform. This waveform can not only be better downward compatible, but also may retain technical advantages of OFDM, at the same time has an effect of resisting the deterioration of the demodulation performance caused by a rapid time variation of a channel, increases the consideration of the Doppler diversity gain, and can improve the demodulation performance and user perception to a larger extent especially for a high-speed mobile user. In addition, the waveform technology can also weaken the influence of subband-level interference in the system or symbol-level interface of an inter-system, and improve an anti-interference capability.

It needs to be noted that a performing subject for the method for transmitting the signal provided by the embodiment of the present application may be an apparatus for transmitting a signal. The apparatus for transmitting the signal performing a method for transmitting a loaded signal is used as an example in the embodiment of the present application to illustrate an apparatus for transmitting a signal provided by the embodiment of the present application.

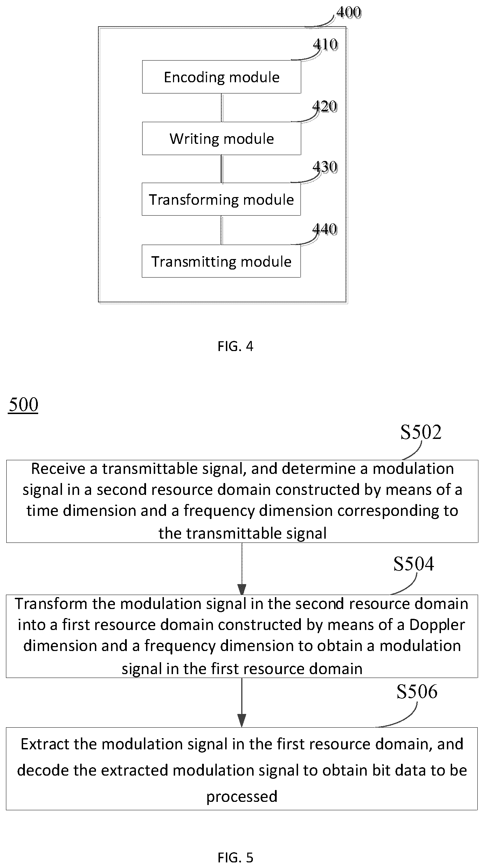

FIG. 4 is a schematic structural diagram of a transmitting device according to an embodiment of the present application. As shown in FIG. 4, the transmitting device 400 includes: an encoding module 410, a writing module 420, a transforming module 430, and a transmitting module 440.

The encoding module 410 is configured to encode bit data to be transmitted to obtain a modulation signal corresponding to the bit data to be transmitted. The writing module 420 is configured to write the modulation signal into a first resource domain constructed by means of a Doppler dimension and a frequency dimension to obtain a modulation signal in the first resource domain. The transforming module 430 is configured to transform the modulation signal in the first resource domain into a second resource domain constructed by means of a time dimension and a frequency dimension to obtain a modulation signal in the second resource domain. The transmitting module 440 is configured to determine a transmittable signal on the basis of the modulation signal in the second resource domain and transmit the transmittable signal of the bit data to be transmitted.

In an implementation, the transmitting module 440 is configured to map a demodulation reference signal corresponding to the bit data to be transmitted to the second resource domain to obtain a demodulation reference signal in the second resource domain; and determine the transmittable signal on the basis of the modulation signal and the demodulation reference signal in the second resource domain.

In an implementation, the transmitting module 440 is configured to pre-encode the modulation signal in the second resource domain to obtain a pre-encoded signal corresponding to the modulation signal in the second resource domain; and transform the pre-encoded signal and the demodulation reference signal in the second resource domain into a time domain transmission signal, and determine the time domain transmission signal as the transmittable signal.

In an implementation, a grid in the first resource domain is not the same size as a grid in the second resource domain. The transforming module 430 is configured to transform the modulation signal in the first resource domain into a third resource domain constructed by means of a time dimension and a frequency dimension to obtain a modulation signal in the third resource domain, wherein a grid in the third resource domain is the same size as the grid in the first resource domain; and map the modulation signal in the third resource domain to the second resource domain constructed by means of the time dimension and the frequency dimension.

In an implementation, the transforming module 430 is configured to transform, on the basis of an inverse Fourier transform, the modulation signal in the first resource domain into the third resource domain constructed by means of the time dimension and the frequency dimension.

In an implementation, the modulation signal in the second resource domain is a single carrier signal, and the transmitting module is configured to pre-encode, on the basis of a discrete Fourier transform, the modulation signal in the second resource domain in a frequency direction to obtain the pre-encoded signal corresponding to the modulation signal in the second resource domain.

In an implementation, the signal in the second resource domain is a multicarrier signal, and the transmitting module is configured to determine the modulation signal in the second resource domain as the pre-encoded signal corresponding to the modulation signal in the second resource domain.

In the embodiment of the present application, the modulation signal corresponding to the bit data to be transmitted is obtained by encoding the bit data to be transmitted, the modulation signal is written into the first resource domain constructed by means of the Doppler dimension and the frequency dimension to obtain the modulation signal in the first resource domain, the modulation signal in the first resource domain is transformed into the second resource domain constructed by means of the time dimension and the frequency dimension to obtain the modulation signal in the second resource domain, and the transmittable signal of the bit data to be transmitted is determined on the basis of the modulation signal in the second resource domain. A new waveform-orthogonal frequency-Doppler space (OFDM) is proposed on the basis of an orthogonal frequency division multiplexing (OFDM) waveform. This waveform can not only be better downward compatible, but also may retain technical advantages of OFDM, at the same time has an effect of resisting the deterioration of the demodulation performance caused by a rapid time variation of a channel, increases the consideration of the Doppler diversity gain, and can improve the demodulation performance and user perception to a larger extent especially for a high-speed mobile user. In addition, the waveform technology can also weaken the influence of subband-level interference in the system or symbol-level interface of an inter-system, and improve an anti-interference capability.

The transmitting device in the embodiment of the present application may be an electronic device, such as an electronic device having an operating system, or may be a part in the electronic device, such as an integrated circuit or chip. The electronic device may be a terminal or may be a device other than the terminal. Exemplarily, the transmitting device may include, but is not limited to, the types of the transmitting device 11 listed above, and the other device may be a server, network attached storage (NAS), etc., which is not specifically limited by the embodiment of the present application.

The transmitting device provided by the embodiment of the present application can realize various processes realized by the method embodiments of FIG. 2 to FIG. 3 and achieve the same technical effect, which will not be repeated herein in order to avoid repetition.

The method for transmitting the signal according to the embodiment of the present application is described in detail above in conjunction with FIG. 2. A method for transmitting a signal according to another embodiment of the present application will be described in detail below in conjunction with FIG. 5. It may be understood that the interaction of the receiving device with the transmitting device described from the side of the receiving device is the same as that described from the side of the transmitting device in the method shown in FIG. 2, and the relevant description is appropriately omitted in order to avoid repetition.

FIG. 5 is a schematic flowchart of implementing a method for transmitting a signal of an embodiment of the present application, which may be applied on the side of a receiving device, the receiving device may be a terminal or a network-side device, and as shown in FIG. 5, the method 500 includes the following.

S502: a transmittable signal is received, and a modulation signal in a second resource domain constructed by means of a time dimension and a frequency dimension corresponding to the transmittable signal is determined.

In an implementation, a baseband obtains a time domain signal (i.e., the transmittable signal) in a digital domain through the transfer of a remote radio unit (RRU), then a frequency domain signal corresponding to the transmittable signal may be determined, and the frequency domain signal is inversely pre-encoded to obtain the modulation signal in the second resource domain constructed by means of the time dimension and the frequency dimension.

In some examples, a demodulation reference signal may be obtained on the basis of the frequency domain signal, a channel estimation and basis measurement are performed on the basis of the demodulation reference signal to determine a pre-encoded weight, the frequency domain signal is equalized on the basis of the pre-encoded weight to eliminate a channel response to obtain an equalized frequency domain signal, and inverse pre-encoding is performed using equalized X[f,t] to obtain X[m,t] (i.e., the modulation signal in the second resource domain).

In some examples, if X[f,t] is a single carrier, inverse transmission pre-encoding may be performed on the data sequentially in the time dimension according to the symbols, i.e., the IDFT is performed, as follows:

$$X[m,t] = \sum_{m=0}^{M-1} X[f,t] e^{j2\pi tf/M} \qquad (3)$$

where M represents the number of Re carried on a symbol of the user.

In some examples, if X[f,t] is multicarrier, there is no need for inverse transmission pre-encoding of the data symbols, i.e., X[m, t] = X[f, t].

S504: the modulation signal in the second resource domain is transformed into a first resource domain constructed by means of a Doppler dimension and a frequency dimension to obtain a modulation signal in the first resource domain.

A grid in the first resource domain may be the same or may be not the same size as a grid in the second resource domain. In an implementation, if the grid in the first resource domain is the same size as the grid in the second resource domain, the modulation signal in the second resource domain may be directly transformed into the first resource domain constructed by means of the Doppler dimension and the frequency dimension to obtain the modulation signal in the first resource domain.

In an implementation, if the grid in the first resource domain is not the same size as the grid in the second resource domain (i.e., a Time-Frequency domain, which may be shortened to a physical TF domain), then the modulation signal in the second resource domain may be mapped to a third resource domain constructed by means of a time dimension and a frequency dimension in accordance with a mapping relationship between a virtual DF domain and a physical DF domain consistent with the transmitting device. A grid in the third resource domain is the same size as the grid in the first resource domain, and a modulation signal in the third resource domain is transformed into the first resource domain constructed by means of the Doppler dimension and the frequency dimension to obtain the modulation signal in the first resource domain.

In some examples, inverse resource mapping may be performed on X[m,t] obtained by inverse pre-encoding and a virtual resource block in the virtual TF domain (i.e., the third resource domain) to obtain a TF domain signal on the virtual resource block, i.e., $X[m, t] \rightarrow \hat{X}[\hat{m}, \hat{t}]$, and then, $\hat{X}[\hat{m}, \hat{t}]$ is transformed into the DF domain (i.e., the first resource domain). The transform of the signal from the virtual TF domain to the DF domain may be realized by means of transforms such as DFT and FFT/STFT. The DFT is taken as an example, i.e.

$$X[m, d] = \sum_{d=0}^{N-1} \hat{X}[\hat{m}, \hat{t}] e^{j2\pi t d / N} \qquad (4)$$

A value of N is related to whether a DMRS symbol carries data Re. Typically, there are only two values to select from, specifically related to a mapping pattern of the DMRS and the Data.

S506: the modulation signal in the first resource domain is extracted, and the extracted modulation signal is decoded to obtain bit data to be processed.

In an implementation, a valid modulation signal may be extracted from the DF domain, and then modulation information is transferred to de-pre-encoding, de-modulation, a de-layering module and a bit-level processing module to obtain valid decoded bit data. If a DMRS and a modulation signal of a terminal use the same pre-encoded weight, inverse pre-encoding may not be performed here.

In an implementation, the extracted modulation signal may be decoded to obtain the bit data to be processed and a first check result, wherein the first check result may be a check result generated by a transmitting device on the basis of the bit data to be processed, a second check result is then generated on the basis of the bit data to be processed, and whether the bit data to be processed is tampered within a transmission process is determined on the basis of the second check result and the first check result. The first check result may be a cyclic redundancy check (CRC) result.

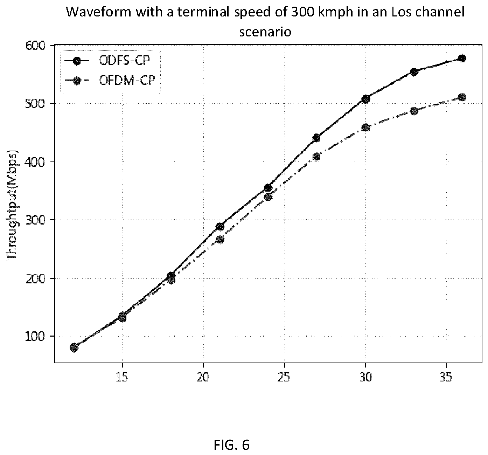

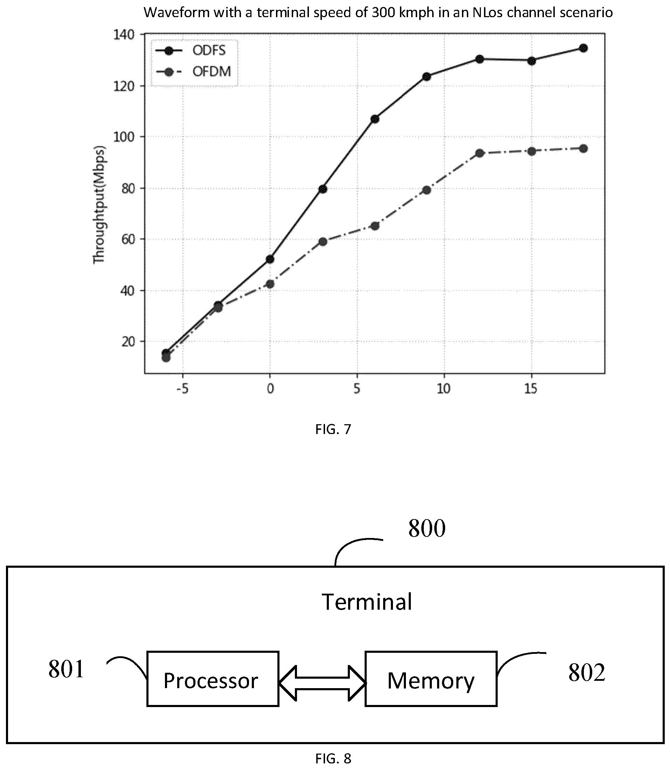

FIG. 6 is a performance comparison of two waveforms, ODFS and OFDM, in a line of sight (Los) channel scenario. FIG. 7 is a performance comparison of two waveforms, ODFS and OFDM, in a non line of sight (NLos) channel scenario. FIG. 6 and FIG. 7 are the performance comparisons of the two waveforms, ODFS and OFDM, in different channel scenarios obtained through simulation experiments, and from FIG. 6 and FIG. 7, it may be seen that a performance of the OFDM waveform proposed by the present application is higher than that of the ODFS waveform in the Los channel scenario and in the NLos channel scenario.

In the embodiment of the present application, the transmittable signal is received, the modulation signal in the second resource domain constructed by means of the time dimension and the frequency dimension corresponding to the transmittable signal is determined, the modulation signal in the second resource domain is transformed into the first resource domain constructed by means of the Doppler dimension and the frequency dimension to obtain the modulation signal in the first resource domain, the modulation signal in the first resource domain is extracted, and the extracted modulation signal is decoded to obtain the bit data to be processed. A new waveform-orthogonal frequency-Doppler space (OFDM) is proposed by the present application on the basis of an orthogonal frequency division multiplexing (OFDM) waveform. This waveform can not only be better downward compatible, but also may retain technical advantages of OFDM, at the same time has an effect of resisting the deterioration of the demodulation performance caused by a rapid time variation of a channel, increases the consideration of the Doppler diversity gain, and can improve the demodulation performance and user perception to a larger extent especially for a high-speed mobile user. In addition, the waveform technology can also weaken the influence of subband-level interference in the system or symbol-level interface of an inter-system, and improve an anti-interference capability.

The transmitting device provided by the embodiment of the present application can realize various processes realized by the embodiments of the method for transmitting the signal of FIG. 2 to FIG. 3 or various processes corresponding thereto, and achieve the same or corresponding technical effect, which will not be repeated herein in order to avoid repetition. Optionally, as shown in FIG. 8, an embodiment of the present application further provides a terminal 800, including a processor 801 and a memory 802, the memory 802 stores thereon a program or an instruction that can be run on the processor 801, and the program or instruction, when executed by the processor 801, implements the various steps of the embodiment of the method for transmitting the signal, and can achieve the same technical effect, which will not be repeated herein in order to avoid repetition.

The terminal may further include but is not limited to: a radio frequency unit, a network module, an audio output unit, an input unit, a sensor, a display unit, a user input unit, an interface unit, a memory, and at least some of parts in a processor, etc.

It may be understood by those of skill in the art that the terminal may further include a power source (e.g., a battery) that supplies power to various parts, and the power source may be logically connected to the processor through a power management system, so as to realize functions such as managing charging, discharging, and power consumption management through the power management system. The terminal structure illustrated in the drawing does not constitute a limitation of the terminal, and the terminal may include more or fewer parts than illustrated, or a combination of certain parts, or a different arrangement of parts, which will not be repeated herein.

An embodiment of the present application further provides a readable storage medium, the readable storage medium stores a program or an instruction thereon, and the program or instruction, when executed by a processor, implements various processes of the embodiment of the method for transmitting the signal, and can achieve the same technical effect, which will not be repeated herein in order to avoid repetition.

The processor is the processor in the terminal described in the above embodiment. The readable storage medium includes a computer-readable storage medium such as a computer read-only memory (ROM), a random access memory (RAM), a magnetic disk or an optical disk.

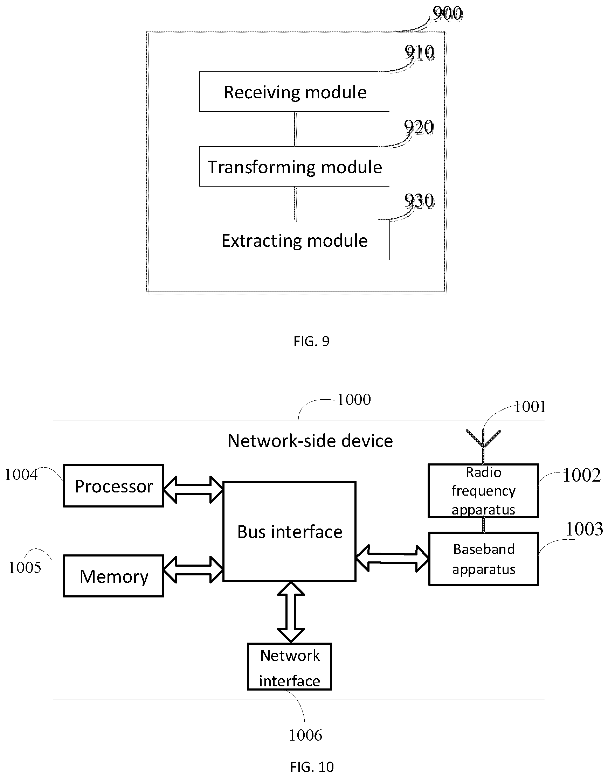

FIG. 9 is a schematic structural diagram of a receiving device according to an embodiment of the present application. As shown in FIG. 9, the receiving device 900 includes: a receiving module 910, a transforming module 920, and an extracting module 930.

The receiving module 910 is configured to receive a transmittable signal, and determine a modulation signal in a second resource domain constructed by means of a time dimension and a frequency dimension corresponding to the transmittable signal. The transforming module 920 is configured to transform the modulation signal in the second resource domain into a first resource domain constructed by means of a Doppler dimension and a frequency dimension to obtain a modulation signal in the first resource domain. The extracting module 930 is configured to extract the modulation signal in the first resource domain, and decode the extracted modulation signal to obtain bit data to be processed.

In an implementation, the receiving module 910 is configured to determine a frequency domain signal corresponding to the transmittable signal; and inversely pre-encode the frequency domain signal to obtain the modulation signal in the second resource domain constructed by means of the time dimension and the frequency dimension.

In an implementation, a grid in the first resource domain is not the same size as a grid in the second resource domain. The transforming module 920 is configured to map the modulation signal in the second resource domain into a third resource domain constructed by means of a time dimension and a frequency dimension, wherein a grid in the third resource domain is the same size as the grid in the first resource domain; and transform a modulation signal in the third resource domain into the first resource domain constructed by means of the Doppler dimension and the frequency dimension to obtain the modulation signal in the first resource domain.

In an implementation, the extracting module 930 is configured to decode the extracted modulation signal to obtain the bit data to be processed and a first check result, wherein the first check result is a check result generated by a transmitting device on the basis of the bit data to be processed; and generate a second check result on the basis of the bit data to be processed, and determine, on the basis of the second check result and the first check result, whether the bit data to be processed is tampered within a transmission process.

In an implementation, the receiving module 910 is configured to obtain a demodulation reference signal on the basis of the frequency domain signal, and determine a pre-encoded weight on the basis of the demodulation reference signal; and equalize the frequency domain signal on the basis of the pre-encoded weight to obtain an equalized frequency domain signal, and determine the equalized frequency domain signal as the modulation signal in the second resource domain.

The apparatus for transmitting the signal provided by the embodiment of the present application can realize various processes realized by the embodiment of the method for transmitting of FIG. 5 or various processes corresponding thereto, and achieve the same or corresponding technical effect, which will not be repeated herein in order to avoid repetition.

An embodiment of the present application further provides a receiving device, the embodiment of the receiving device corresponds to the embodiment of the above method for transmitting the signal, and each implementation process and implementation mode of the above method embodiment may be applicable to the embodiment of the receiving device, and can achieve the same technical effect.

Specifically, an embodiment of the present application further provides a network-side device. As shown in FIG. 10, the network device 1000 includes: an antenna 1001, a radio frequency apparatus 1002, a baseband apparatus 1003, a processor 1004, and a memory 1005. The antenna 1001 is connected to the radio frequency apparatus 1002. In an uplink direction, the radio frequency apparatus 1002 receives information through the antenna 1001 and transmits the received information to the baseband apparatus 1003 for processing. In a downlink direction, the baseband apparatus 1003 processes the information to be transmitted and transmits it to the radio frequency apparatus 1002, and the radio frequency apparatus 1002 processes the received information and transmits it through the antenna 1001.

The method performed by the network-side device in the above embodiment may be realized in the baseband apparatus 1003, and the baseband apparatus 1003 includes a baseband processor.

The baseband apparatus 1003 may, for example, include at least one baseband board on which a plurality of chips are arranged, and as shown in FIG. 10, one of the chips, for example, is the baseband processor, and connected to the memory 1005 through a bus interface to call a program in the memory 1005 to perform the network device operation shown in the above method embodiment.

The network-side device may further include a network interface 1006, which is, for example, a common public radio interface (CPRI).

Specifically, the network-side device 1000 of the embodiment of the present application further includes: an instruction or program stored on the memory 1005 and runnable on the processor 1004, and the processor 1004 calls the instruction or program in the memory 1005 to perform the method performed by the modules shown in FIG. 9, and achieves the same technical effect, which is not repeated herein in order to avoid repetition.

An embodiment of the present application further provides a readable storage medium, the readable storage medium stores a program or an instruction thereon, and the program or instruction, when executed by a processor, implements the various processes of the embodiment of the method for transmitting the signal, and can achieve the same technical effect, which will not be repeated herein in order to avoid repetition.

The processor is a processor in the transmitting device described in the above embodiment. The readable storage medium includes a computer-readable storage medium such as a computer read-only memory (ROM), a random access memory (RAM), a magnetic disk or an optical disk.

An embodiment of the present application further provides a chip, the chip includes a processor and a communication interface, the communication interface and the processor are coupled, and the processor is configured to run a program or an instruction to implement the various processes of the above embodiment of the method for transmitting the signal, and can achieve the same technical effect, which will not be repeated herein in order to avoid repetition.

It should be understood that the chip referred to in the embodiment of the present application may also be referred to as a system-level chip, a system chip, a chip system, or chip of a system on chip, etc.

An embodiment of the present application further provides a computer program/program product, the computer program/program product is stored in a storage medium, and the computer program/program product is executed by at least one processor to implement the various processes of the embodiment of the method for transmitting the signal, and can achieve the same technical effect, which will not be repeated herein in order to avoid repetition.

An embodiment of the present application further provides a system for transmitting a signal, including: a transmitting device and a receiving device, the transmitting device may be configured to perform the steps of the method for transmitting the signal as described above, and the receiving device may be configured to perform the steps of the method for transmitting the signal as described above.

It needs to be noted that in this context, terms "include", "contain", or any other variant thereof, are intended to cover non-exclusive inclusion, so that a process, method, item or apparatus that includes a series of elements includes not only those elements but also other elements that are not explicitly listed or further includes elements that are inherent to such a process, method, item or apparatus. Without more limitations, an element defined by a phrase "including a ..." does not exclude the existence of other identical elements in the process, method, item or apparatus including the element. In addition, it needs to be noted that the scopes of the methods and apparatuses in the embodiments of the present application are not limited to performing the functions in the order shown or discussed, but may also include performing the functions in a substantially simultaneous mode or in a reverse order according to the functions involved, e.g., the described methods may be performed in a different order than described, and various steps may be added, omitted, or combined. In addition, features described with reference to some examples may be combined in other examples.

Through the description of the above implementation, those of skill in the art can clearly understand that the above embodiment methods may be realized by means of software plus a necessary general hardware platform, and of course, it can also be realized by hardware, but in many cases the former is the better implementation. Based on the understandings, the technical solution of the present application can be embodied in a form of a computer software product essentially or on the part of contributions to the prior art. The computer software product is stored in a storage medium (such as the ROM/RAM, the magnetic disc and the optical disc) and includes a plurality of instructions used to enable a terminal (which may be a mobile phone, a computer, a server, an air conditioner, or a network device, etc.) to perform the methods described in various embodiments of the present application.

The embodiments of the present application are described above in conjunction with the accompanying drawings, but the present application is not limited to the above specific implementations, and the above specific implementations are merely schematic and not limiting, and those of ordinary skill in the art, under the inspiration of the present application, can make many forms without departing from the scope of the protection of the purposes and claims of the present application, all of which are under the protection of the present application.

**Claims**

1. A method for transmitting a signal, comprising:

   encoding bit data to be transmitted to obtain a modulation signal corresponding to the bit data to be transmitted;
   writing the modulation signal into a first resource domain constructed by means of a Doppler dimension and a frequency dimension to obtain a modulation signal in the first resource domain;
   transforming the modulation signal in the first resource domain into a second resource domain constructed by means of a time dimension and a frequency dimension to obtain a modulation signal in the second resource domain; and
   determining a transmittable signal of the bit data to be transmitted on the basis of the modulation signal in the second resource domain.

2. The method according to claim 1, wherein determining a transmittable signal of the bit data to be transmitted on the basis of the modulation signal in the second resource domain comprises:

   mapping a demodulation reference signal corresponding to the bit data to be transmitted to the second resource domain to obtain a demodulation reference signal in the second resource domain; and
   determining a transmittable signal on the basis of the modulation signal and the demodulation reference signal in the second resource domain.

3. The method according to claim 2, wherein determining a transmittable signal on the basis of the modulation signal and the demodulation reference signal in the second resource domain comprises:

   pre-encoding the modulation signal in the second resource domain to obtain a pre-encoded signal corresponding to the modulation signal in the second resource domain; and
   transforming the pre-encoded signal and the demodulation reference signal in the second resource domain into a time domain transmission signal, and determining the time domain transmission signal as the transmittable signal.

4. The method according to claim 3, wherein a grid in the first resource domain is not the same size as a grid in the second resource domain, and transforming the modulation signal in the first resource domain into a second resource domain constructed by means of a time dimension and a frequency dimension comprises:

   transforming the modulation signal in the first resource domain into a third resource domain constructed by means of a time dimension and a frequency dimension to obtain a modulation signal in the third resource domain, wherein a grid in the third resource domain is the same size as the grid in the first resource domain; and
   mapping the modulation signal in the third resource domain to a second resource domain constructed by means of a time dimension and a frequency dimension.

5. The method according to claim 4, wherein transforming the modulation signal in the first resource domain into a third resource domain constructed by means of a time dimension and a frequency dimension comprises:
   transforming, on the basis of an inverse Fourier transform, the modulation signal in the first resource domain into a third resource domain constructed by means of a time dimension and a frequency dimension.

6. The method according to claim 5, wherein the modulation signal in the second resource domain is a single carrier signal, and pre-encoding the modulation signal in the second resource domain to obtain a pre-encoded signal corresponding to the modulation signal in the second resource domain comprises:
   pre-encoding, on the basis of a discrete Fourier transform, the modulation signal in the second resource domain in a frequency direction to obtain a pre-encoded signal corresponding to the modulation signal in the second resource domain.

7. The method according to claim 6, wherein the signal in the second resource domain is a multicarrier signal, and pre-encoding the modulation signal in the second resource domain to obtain a pre-encoded signal corresponding to the modulation signal in the second resource domain comprises:
   determining the modulation signal in the second resource domain as a pre-encoded signal corresponding to the modulation signal in the second resource domain.

8. A method for transmitting a signal, comprising:

receiving a transmittable signal, and determining a modulation signal in a second resource domain constructed by means of a time dimension and a frequency dimension corresponding to the transmittable signal;

transforming the modulation signal in the second resource domain into a first resource domain constructed by means of a Doppler dimension and a frequency dimension to obtain a modulation signal in the first resource domain; and

extracting the modulation signal in the first resource domain, and decoding the extracted modulation signal to obtain bit data to be processed.

9. The method according to claim 8, wherein determining a modulation signal in a second resource domain constructed by means of a time dimension and a frequency dimension corresponding to the transmittable signal comprises:

determining a frequency domain signal corresponding to the transmittable signal; and

inversely pre-encoding the frequency domain signal to obtain a modulation signal in a second resource domain constructed by means of a time dimension and a frequency dimension.

10. The method according to claim 9, wherein a grid in the first resource domain is not the same size as a grid in the second resource domain, and transforming the modulation signal in the second resource domain into a first resource domain constructed by means of a Doppler dimension and a frequency dimension to obtain a modulation signal in the first resource domain comprises:

mapping the modulation signal in the second resource domain into a third resource domain constructed by means of a time dimension and a frequency dimension, wherein a grid in the third resource domain is the same size as the grid in the first resource domain; and

transforming a modulation signal in the third resource domain into a first resource domain constructed by means of a Doppler dimension and a frequency dimension to obtain a modulation signal in the first resource domain.

11. The method according to claim 10, wherein decoding the extracted modulation signal to obtain bit data to be processed comprises:

decoding the extracted modulation signal to obtain bit data to be processed and a first check result, wherein the first check result is a check result generated by a transmitting device on the basis of the bit data to be processed; and

generating a second check result on the basis of the bit data to be processed, and determining, on the basis of the second check result and the first check result, whether the bit data to be processed is tampered within a transmission process.

12. The method according to claim 11, wherein inversely pre-encoding the frequency domain signal to obtain a modulation signal in a second resource domain constructed by means of a time dimension and a frequency dimension comprises:

obtaining a demodulation reference signal on the basis of the frequency domain signal, and determining a pre-encoded weight on the basis of the demodulation reference signal; and

equalizing the frequency domain signal on the basis of the pre-encoded weight to obtain an equalized frequency domain signal, and determining the equalized frequency domain signal as a modulation signal in the second resource domain.

13. A transmitting device, comprising:

an encoding module, configured to encode bit data to be transmitted to obtain a modulation signal corresponding to the bit data to be transmitted;

a writing module, configured to write the modulation signal into a first resource domain constructed by means of a Doppler dimension and a frequency dimension to obtain a modulation signal in the first resource domain;

a transforming module, configured to transform the modulation signal in the first resource domain into a second resource domain constructed by means of a time dimension and a frequency dimension to obtain a modulation signal in the second resource domain; and

a transmitting module, configured to determine a transmittable signal of the bit data to be transmitted on the basis of the modulation signal in the second resource domain.

14. A receiving device, comprising:

a receiving module, configured to receive a transmittable signal, and determine a modulation signal in a second resource domain constructed by means of a time dimension and a frequency dimension corresponding to the transmittable signal;
a transforming module, configured to transform the modulation signal in the second resource domain into a first resource domain constructed by means of a Doppler dimension and a frequency dimension to obtain a modulation signal in the first resource domain; and
an extracting module, configured to extract the modulation signal in the first resource domain, and decode the extracted modulation signal to obtain bit data to be processed.

15. A readable storage medium, storing a program or instruction thereon, wherein the program or instruction, when run by a processor, implements the method according to any one of claims 1-7 or implements the method according to any one of claims 8-12.

12

Receiving device

11

11

Transmitting device

Transmitting device

FIG. 1

## 200

S202

Encode bit data to be transmitted to obtain a modulation signal corresponding to the bit data to be transmitted

S204

Write the modulation signal into a first resource domain constructed by means of a Doppler dimension and a frequency dimension to obtain a modulation signal in the first resource domain

S206

Transform the modulation signal in the first resource domain into a second resource domain constructed by means of a time dimension and a frequency dimension to obtain a modulation signal in the second resource domain

S208

Determine a transmittable signal of the bit data to be transmitted on the basis of the modulation signal in the second resource domain

FIG. 2

FIG. 3

400

```
┌─────────────────────────────────────┐
│                              410     │
│    ┌─────────────────────────┐       │
│    │    Encoding module      │       │
│    └─────────────────────────┘       │
│                              420     │
│    ┌─────────────────────────┐       │
│    │     Writing module      │       │
│    └─────────────────────────┘       │
│                              430     │
│    ┌─────────────────────────┐       │
│    │   Transforming module   │       │
│    └─────────────────────────┘       │
│                              440     │
│    ┌─────────────────────────┐       │
│    │   Transmitting module   │       │
│    └─────────────────────────┘       │
│                                      │
└─────────────────────────────────────┘
```

FIG. 4

500

S502

Receive a transmittable signal, and determine a modulation signal in a second resource domain constructed by means of a time dimension and a frequency dimension corresponding to the transmittable signal

S504

Transform the modulation signal in the second resource domain into a first resource domain constructed by means of a Doppler dimension and a frequency dimension to obtain a modulation signal in the first resource domain

S506

Extract the modulation signal in the first resource domain, and decode the extracted modulation signal to obtain bit data to be processed

FIG. 5

Waveform with a terminal speed of 300 kmph in an Los channel
scenario

FIG. 6

Waveform with a terminal speed of 300 kmph in an NLos channel scenario

FIG. 7

FIG. 8

900

910

Receiving module

920

Transforming module

930

Extracting module

FIG. 9

1000

1001

Network-side device

1004

Processor

1005

Memory

Bus interface

Network
interface

1006

Radio
frequency
apparatus

1002

Baseband
apparatus

1003

FIG. 10

## INTERNATIONAL SEARCH REPORT

International application No.

**PCT/CN2023/113110**

### A. CLASSIFICATION OF SUBJECT MATTER

H04W 28/06(2009.01)i

According to International Patent Classification (IPC) or to both national classification and IPC

### B. FIELDS SEARCHED

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, VEN, ENTXT, 3GPP, CJFD, IEEE: 资源域, 调制, 信号, 多普勒, 频率, 时间, 发射, 接收, resource, domain, modulate, signal, Doppler, frequency, time, transmit, receive

### C. DOCUMENTS CONSIDERED TO BE RELEVANT

| Category* | Citation of document, with indication, where appropriate, of the relevant passages | Relevant to claim No. |
|---|---|---|
| X | CN 114158090 A (VIVO COMMUNICATION TECHNOLOGY CO., LTD.) 08 March 2022 (2022-03-08) description, paragraphs [0054]-[0248] | 1-15 |
| A | CN 112737745 A (VOLKSWAGEN AKTIENGESELLSCHAFT) 30 April 2021 (2021-04-30) entire document | 1-15 |
| A | WO 2018091535 A1 (NOKIA TECHNOLOGIES OY) 24 May 2018 (2018-05-24) entire document | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 November 2023** | **23 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/113110**

| Patent document cited in search report | | | Publication date (day/month/year) | Patent family member(s) | | | Publication date (day/month/year) |
|---|---|---|---|---|---|---|---|
| CN | 114158090 | A | 08 March 2022 | None | | | |
| CN | 112737745 | A | 30 April 2021 | KR | 20210044167 | A | 22 April 2021 |
| | | | | US | 2021111784 | A1 | 15 April 2021 |
| | | | | US | 11245463 | B2 | 08 February 2022 |
| | | | | EP | 3809656 | A1 | 21 April 2021 |
| WO | 2018091535 | A1 | 24 May 2018 | EP | 3324591 | A1 | 23 May 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211006871